# EUROPEAN PATENT APPLICATION

(11) **EP 2 056 190 A1**
(43) Date of publication of application: **06.05.2009**
(21) Application number: 08018197.7
(22) Date of filing: 17.10.2008
(51) Int. Cl.: G06F 3/048, G06F 9/44

(54) **Imaging device providing soft buttons and method of changing attributes of the soft buttons**

(30) Priority: 26.10.2007 KR 20070108044
(71) Applicant: MEDISON CO., LTD., Kangwon-do 250-870 (KR)
(72) Inventor: Kim, Sung Nam, Gangnam-gu Seoul 135-280 (KR)
(74) Representative: Schmid, Wolfgang

(57) **Abstract**

The present invention relates to an imaging device having a touch screen as a user interface and a method of changing attributes of a soft button provided on the touch screen. Each of the attributes has an attribute name and a plurality of attribute values. The method includes: receiving a request for designating a soft button and changing attributes of the designated soft button through the touch screen; providing a window displaying attribute names associated with the designated soft button on the touch screen in response to the request; receiving a selection instruction to select one of the attribute names on the window; receiving change information for changing an attribute value corresponding to the selected attribute name; and changing the attribute value of the designated soft button based on the change information.

## Description

The present application claims priority from Korean Patent Application No. 10-2007-0108044 filed on October 26, 2007, the entire subject matters of which are incorporated herein by reference.

### BACKGROUND OF THE INVENTION

### [Technical Field]

The present invention generally relates to an imaging device, and more particularly to an imaging device having a touch screen displaying soft buttons and a method of changing attributes of the soft buttons displayed on the touch screen.

### [Background Art]

A touch screen is widely used as a user interface in various imaging devices. The touch screen is a display that can detect a presence of a user's touch and a touched location in a display area. The imaging device may process previously set instructions in response to the detected presence or location. The touch screen may be manufactured by adding a touch panel on a screen of a general display such as a monitor. The touch panel may be segmented into a plurality of grids and an infrared sensor may be mounted on each of the grids. The infrared sensor may sense a temperature change, so that it can be recognized whether a touch is present on the display area. The imaging device may recognize what the user selects based on a touch position on the display area of the touch screen and then generate input signals corresponding to the selection.

Generally, the touch screen may display a plurality of soft buttons allowing the user to input instructions. Attributes of the soft buttons, such as a position, a size, a color, a shape and the like are previously designed and fixed at the time when the touch screen is installed. Thus, the user may not change the attributes of the soft buttons in the conventional touch screen.

### BRIEF DESCRIPTION OF THE DRAWINGS

FIG. 1 is a block diagram of an illustrative embodiment of an imaging device having a touch screen.

FIG. 2 is a diagram showing a table showing items indicating names of attributes of a soft button, which are hierarchically classified into a plurality of classes.

FIG. 3 is a schematic diagram showing an example of classifying soft buttons provided in a touch screen into a plurality of groups.

FIG. 4 is a schematic diagram showing a display example on a touch screen.

FIGS. 5 to 9 are schematic diagrams showing examples of changing attributes of soft buttons in accordance with one embodiment of the present invention.

### DETAILED DESCRIPTION OF THE INVENTION

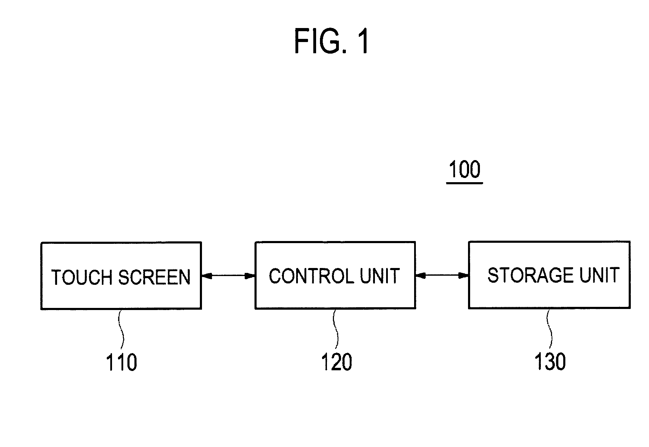

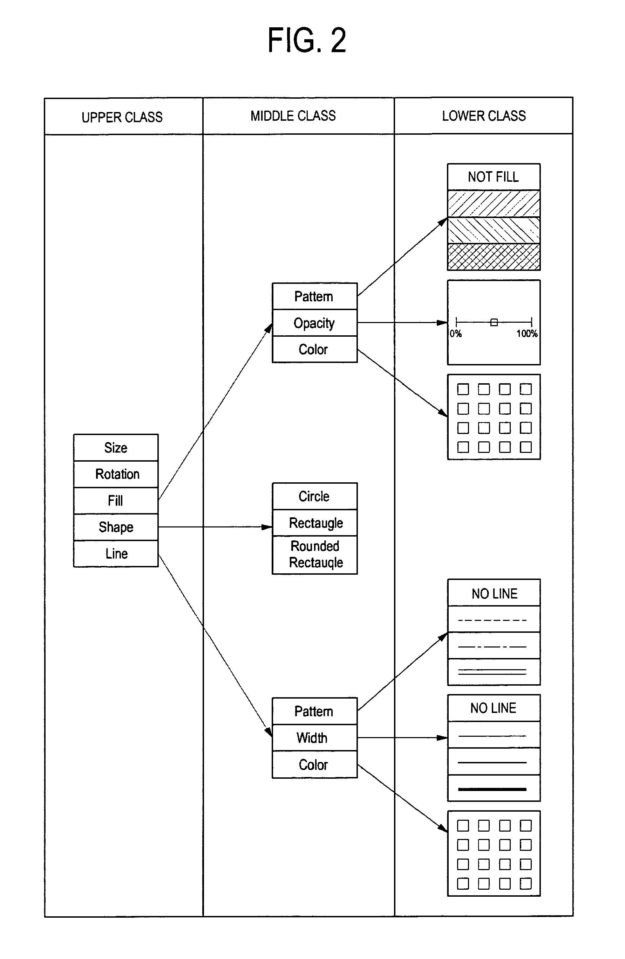

FIG. 1 is a block diagram of an illustrative embodiment of an imaging device having a touch screen. The imaging device 100 may include a touch screen 110 adopted as a user interface, a control unit 120 and a storage unit 130. The touch screen 110 may be operable to display at least one soft button to allow the user to input an instruction. The storage unit 130 may store attributes of the soft button. The storage unit 130 may further store items indicating names and values of the attributes of the soft button (hereinafter, referred to as name items and value items). The name items may include a position, a size, color, a shape, etc. of the soft button. The name and value items may be hierarchically classified into an upper class, a middle class and a lower class, as shown in FIG. 2. The upper class may include the name items. The middle class and the lower class may include value items. The value items may be individually classified to different steps. For example, some value items may be merely classified into the middle class, or some value items may be classified into the middle class and the lower class. As shown in FIG. 2, the name items, "Size," "Rotation," "Fill," "Shape" and "Line" are classified as the upper class. For example, the name item "Shape" may be linked to the middle class, and the name items "Fill" and "Line" may be linked to the middle and lower classes. Although, it is described that the value items are classified into the middle and the lower classes in accordance with one embodiment of the present invention, the value items may be classified to lower classes than the lower class according to the attributes of the soft button.

The control unit 120 may be operable to check whether a request for designating a soft button and changing an attribute value of the designated soft button is inputted from a user. For example, if the user touches a specific soft button for over 5 seconds, the control unit 120 may be operable to determine that the request for designating the specific soft button and changing the attribute value of the designated soft button is inputted. While the request for designating a soft button and changing the attribute value of the designated soft button is determined depending on the duration of the touching time, the request may be is not limited thereto.

If the request for changing the attribute of the designated soft button is inputted, the control unit 120 may be operable to extract name items indicating the attributes of the designated soft button from the storage unit 130 and control the extracted items to be displayed on the touch screen 110, so that the user may select one of the name items. The detailed explanation for changing the attribute value for the selected name item will be described later.

If one of the name items classified as the upper class is selected by the user, the control unit 120 may be operable to control value items, which are linked to the selected name item, to be displayed on the touch screen 110. Also, if one of the value items classified as the middle class is selected, value items, which are classified as the lower class and linked to the selected value item, may be displayed on the touch screen 110. The control unit 120 may be operable to recognize a value item finally selected by the user and apply the selected value item to the designated soft button to thereby change the attribute value of the designated soft button. The soft button whose attribute value is changed may be displayed on the touch screen 120. The changed attribute value of the soft button may be stored in the storage unit 130.

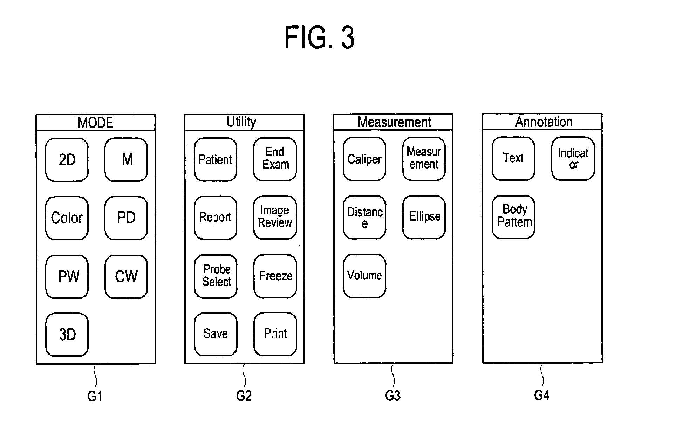

The soft buttons provided on the touch screen 110 may be classified into a plurality of groups as shown in FIG. 3. The groups may include "MODE," "Utility," "Measurement" and "Annotation" groups. A MODE group G1 may include soft buttons to be used for performing image mode switching functions of a displayed ultrasound image. In the MODE group G1, "2D" may be a soft button for requesting a plane image at a designated position on an ultrasound image. The soft button "2D" may be replaced with a soft button "B" representing a brightness mode. "M," "Color," "PD," "PW" and "CW" may be soft buttons for requesting an M-mode image, a color Doppler mode image, a power Doppler mode image, a pulse wave spectral Doppler mode image and a continuous wave spectral Doppler mode image, respectively. "3D" may be a soft button for requesting a 3-dimensional image. Since the modes mentioned above are adopted at the conventional ultrasound diagnostic system, a detailed description of operations performed at the above modes will be omitted.

In the Utility group G2, "Patient" may be a soft button for requesting a text input window for inputting patient information. "END Exam" may be a soft button for requesting end of the examination. "Report" may be a soft button for requesting a report window showing examining results. "Image Review" may be a soft button for requesting previous images. "Probe Select" may be a soft button for requesting a window for inputting probe information. "Freeze" may be a soft button for requesting a temporary pause. "Save" may be a soft button for requesting saving images and various setup values. "Print" may be a soft button for requesting printing out an image.

The Measurement group G3 may include soft buttons necessary for performing image measuring functions. "Caliper" may be a soft button for requesting an information window showing a basic measurement menu. "Measurement" may be a soft button for requesting an information window showing a measurement menu for items of an object in an ultrasound image. "Distance" may be a soft button for requesting distance measurement between two points. "Ellipse" may be a soft button for requesting measuring circumference and area of an object in an ultrasound image. "Volume" may be a soft button for requesting measuring volume.

The Annotation group G4 may include soft buttons necessary for performing image editing functions. "Text" may be a soft button for requesting a text input window for inputting a text on the display area of the touch screen 110. "Indicator" may be a soft button for requesting activation of an indicator of an arrow shape on the display area of the touch screen 110. "Body Pattern" may be a soft button for designating a measurement area.

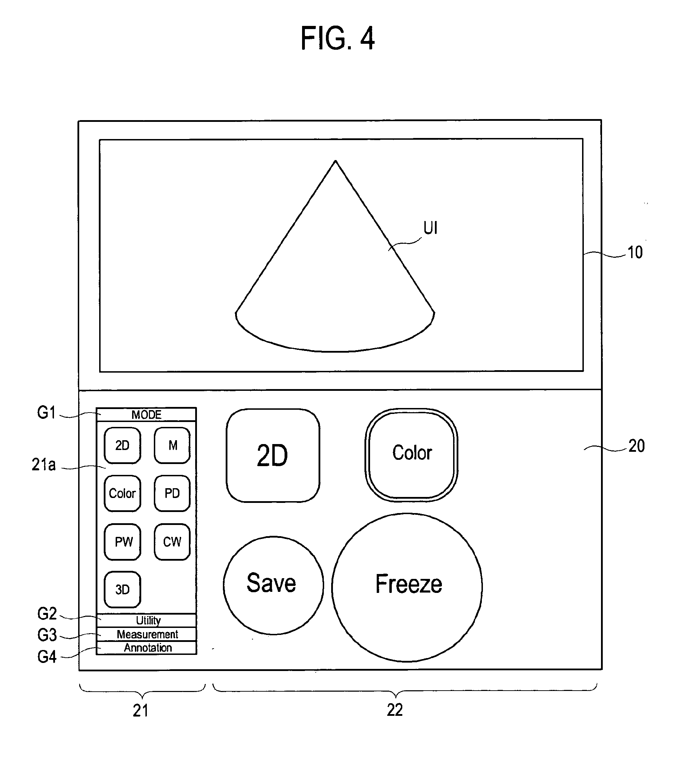

FIG. 4 is a schematic diagram showing a display example on a touch screen. As shown in FIG. 4, the display area of the touch screen is divided into first and second screen areas 10 and 20. An ultrasound image UI may be displayed on the first screen area 10. The second screen area 20 may operate as the touch screen. The second screen area 20 includes a button group indicating area 21 and an activated button indicating area 22. The button groups G1-G4 and pull-down menu thereof are indicated on the button group indication area 21 and the soft buttons, e.g., "2D," "Color," "Save" and "Freeze" are indicated on the activated button indicating area 22. The first screen area 10 for displaying an ultrasound image and the second screen area 20 for indicating soft buttons may be set on a single display unit or different two display units.

The plurality of button groups, e.g., MODE group G1, Utility group G2, Measurement group G3 and Annotation group G4 may be displayed on the button group indicating area 21. Also, the button group indicating area 21 includes a pull down menu area 21a for displaying soft buttons included in the designated button group. In FIG. 4, a pull down menu of the MODE group G3 is displayed on the pull down menu area 21a.

Soft buttons for functions applicable to a currently displayed ultrasound image on the first screen area 10 are displayed on the activated button indicating area 22. For example, the soft buttons "2D," "Color," "Save" and "Freeze" for the functions applicable to the ultrasound image UI displayed on the first screen area 10 may be displayed on activated button indicating area 22.

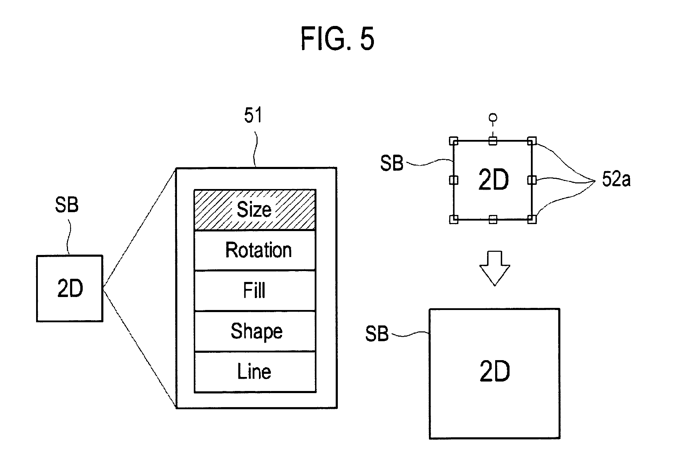

FIGS. 5 to 9 show examples of changing attribute values of soft buttons in accordance with one embodiment of the present invention. FIG. 5 is a schematic diagram illustrating an example of changing a size of a soft button. If the user inputs an instruction for changing an attribute value of a specific soft button SB, i.e., touches the specific soft button SB for a predetermined time, the control unit 120 may be operable to check that the a request for designating the corresponding soft button SB and changing the attribute value of the corresponding soft button is inputted. The control unit 120 may be operable to extract the name items, which are associated with the designated soft button SB and classified as the upper class, from the storing unit 130 and control the touch screen 110 such that a name item window 51 showing the extracted name items is displayed thereon. As shown in FIG 5, if the name item "Size," for example, is selected in the name item window 51, the control unit 120 may be operable to extract edges of the corresponding soft button. Thereafter, the control unit 120 may be operable to form a plurality of markers 52a, e.g., small rectangular markers on the extracted edges of the soft button. The control unit 120 may check whether an instruction for adjusting positions of the markers 52a is inputted from the user. If the position adjusting instruction is inputted, the control unit 120 may adjust the positions of the markers 52a. The control unit 120 may be operable to adjust the edges of the soft button to be fitted with the adjusted markers 52a, so that the attribute value of the soft button indicating the size thereof can be changed. The changed attribute value may be stored in the storage unit 130.

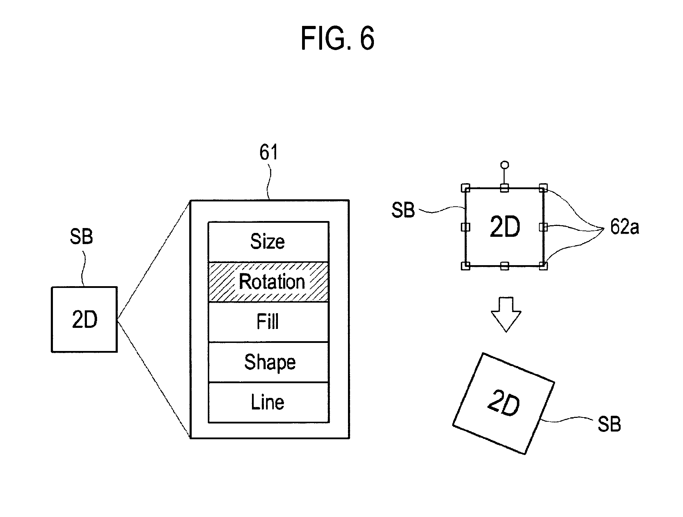

FIG. 6 is a schematic diagram illustrating an example of rotating a soft button. If the user inputs an instruction for changing an attribute value of a soft button, the control unit 120 may be operable to extract the name items, which are associated with the designated soft button SB and classified as the upper class, from the storing unit 130. The control unit 120 may be operable to control the touch screen 110 such that a name item window 61 showing the extracted name items, which are classified as the upper class, is displayed thereon. As illustrated in FIG. 6, if the name item "Rotation," for example, is selected in the name item window 61, the control unit 120 may be operable to extract edges of the corresponding soft button SB, and then form a plurality of markers 62a on the extracted edges of the soft button SB. The control unit 120 checks whether an instruction for adjusting positions of the markers 62a is inputted from the user. If the position adjusting instruction is inputted, the control unit 120 may be operable to adjust the position of the markers 62a. Thereafter, the control unit 120 may be operable to adjust the edges of the soft button SB to be fitted with the adjusted markers 42a, so that the soft button SB may be rotated.

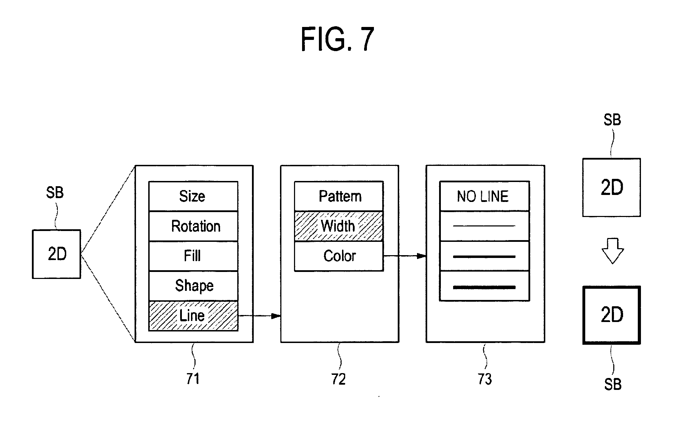

FIG. 7 is a schematic diagram illustrating an example of changing width of edge lines of a soft button. If the user inputs an instruction for changing an attribute value of a soft button SB, the control unit 120 may be operable to extract, which are associated with the designated soft button SB and are classified as the upper class, from the storing unit 130. The control unit 120 may be operable to control the touch screen 110 such that a name item window 71 showing the name items, which are classified as the upper class, is displayed thereon. As illustrated in FIG. 7, if the name item "Line," for example, is selected in the name item window 71, the control unit 120 may be operable to extract value items, which are linked to the name item "Line" and classified as the middle class, from the storing unit 130, and then control the touch screen 110 such that a value item window 72 showing the extracted value items, which are classified as the middle class, is displayed thereon. Subsequently, if an instruction for selecting an value item "Width," for example, on the value item window 72 is inputted, the control unit 120 may be operable to extract value items, which are linked to the value item "Width" and classified as the lower class, and then control the touch screen 110 such that a value item window 73 showing the extracted value items, which are classified as the lower class, is displayed thereon. If an instruction for selecting one of the value items on the value item window 73, the control unit 120 may be operable to change the width of the edge lines of the soft button SB to the width corresponding to the selected value item.

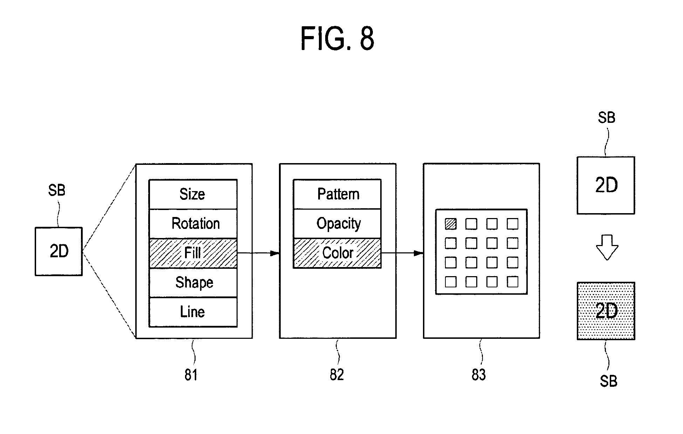

FIG. 8 is a schematic diagram illustrating an example of changing a background color of a soft button. If the user inputs an instruction for changing an attribute value of a soft button SB, the control unit 120 may be operable to extract the name items, which are associated with the soft button SB and classified as the upper class, from the storing unit 130. The control unit 120 may be operable to control the touch screen 110 such that a name item window 81 showing the name items, which are classified as the upper class, is displayed thereon. As illustrated in FIG. 8, if the name item "Fill," for example, is selected in the name item window 81, the control unit 120 may be operable to extract value items, which are linked to the item "Fill" and classified as the middle class, from the storing unit 130, and the control the touch screen 110 such that a value item window 72 showing the extracted value items, which are classified as the middle class, is displayed thereon. Subsequently, if an instruction for selecting a value item "Color," for example, on the value item window 72 is inputted, the control unit 120 may be operable to extract value items, which are linked to the item "Color" and classified as the lower class, and the control the touch screen 110 such that a value item window 83 showing the background colors corresponding to lower class is displayed on the touch screen 110. If an instruction for selecting one of the colors on the item window 83, the control unit 120 may be operable to change the background color of the soft button SB to the selected color.

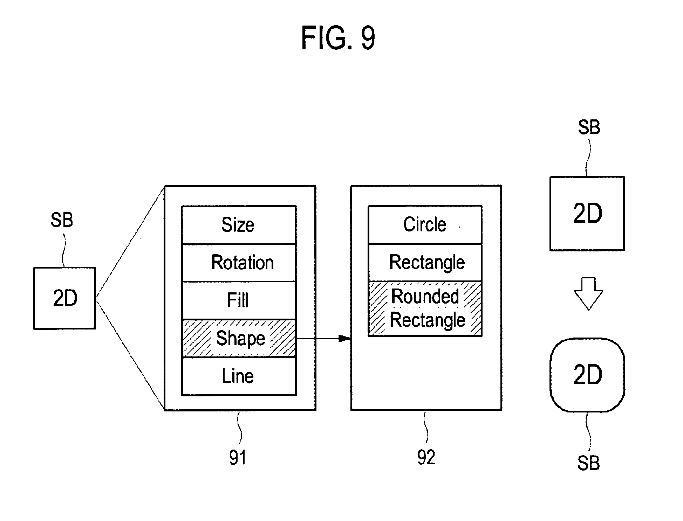

FIG. 9 is a schematic diagram illustrating an example of changing a shape of edge lines of a soft button. If the user inputs an instruction for changing an attribute value of a soft button SB, the control unit 120 may be operable to extract the name items, which are associated with the designated soft button SB and are classified as the upper class, from the storing unit 130. The control unit 120 may be control the touch screen 110 such that a name item window 91 showing the extracted name items, which are classified as the upper class, is displayed thereon. As illustrated in FIG. 9, if the name item "Shape," for example, is selected in the item window 91, the control unit 120 may be operable to extract value items, which are linked to the name item "Shape" and classified as the middle class, from the storing unit 130. The control unit 120 may be operable to control the touch screen 110 such that a value item window 92 showing the extracted value items, which are classified as the middle class, is displayed thereon. If an instruction for selecting one of the value items on the item window 92, the control unit 120 may be operable to change the shape of the edges of the soft button SB to the shape corresponding to the selected value item.

As mentioned above, the attributes of the soft buttons provided on the touch screen in the imaging device can be easily changed in accordance with the present invention.

In accordance with one embodiment of the present invention, there is provided a method of changing attributes of a soft button on a touch screen in an imaging device, said each of the attributes having an attribute name and a plurality of attribute values, comprising: receiving a request for designating a soft button and changing attributes of the designated soft button through the touch screen; providing a window displaying attribute names associated with the designated soft button on the touch screen in response to the request; receiving a selection instruction to select one of the attribute names on the window; receiving change information for changing an attribute value corresponding to the selected attribute name; and changing the attribute value of the designated soft button based on the change information.

In accordance with another embodiment of the present invention, there is provided an imaging device comprising: a touch screen operable to display a plurality of soft buttons for allowing a user to input an instruction, said instruction including a request for designating one of the soft buttons and changing attributes of the designated soft button, said each of the attributes having an attribute name and a plurality of attribute values and said instruction further including a change information for changing an attribute value of the designated soft button; a control unit operable to change the attribute value of the designated soft button based on the attribute change information; and a storing unit operable to store attributes of the soft buttons.

Any reference in this specification to "one embodiment," "an embodiment," "example embodiment," etc. means that a particular feature, structure or characteristic described in connection with the embodiment is included in at least one embodiment of the present invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of changing attributes of a soft button on a touch screen in an imaging device, said each of the attributes having an attribute name and a plurality of attribute values, comprising:
receiving a request for designating a soft button and changing attributes of the designated soft button through the touch screen;
providing a window displaying attribute names associated with the designated soft button on the touch screen in response to the request;
receiving a selection instruction to select one of the attribute names on the window;
receiving change information for changing an attribute value corresponding to the selected attribute name; and
changing the attribute value of the designated soft button based on the change information.

2. The method of Claim 1, further comprising storing the changed attribute value of the designated soft button.

3. The method of Claim 1, wherein the changing attribute value includes:
extracting edges of the designated soft button;
displaying a plurality of markers on the extracted edges of the designated soft button;
receiving an instruction from a user to adjust the markers; and
changing the edges of the designated soft button to be fitted with the adjusted markers.

4. The method of Claim 1, wherein the attributes include a size, a rotation angle, a width of an edge line width, a background color and a shape of an edge line of the designated soft button.

5. An imaging device comprising:
a touch screen operable to display a plurality of soft buttons for allowing a user to input an instruction, said instruction including a request for designating one of the soft buttons and changing attributes of the designated soft button, said each of the attributes having an attribute name and a plurality of attribute values and said instruction further including a change information for changing an attribute value of the designated soft button;
a control unit operable to change the attribute value of the designated soft button based on the attribute change information; and
a storing unit operable to store attributes of the soft buttons.

6. The imaging device of Claim 5, wherein the control unit is configured to perform functions:
extracting attribute names associated with the designated soft button in response to the designating request;
controlling the touch screen such that an item window showing the extracted attribute names is displayed thereon;
extracting edges of the designated soft button in response to the change information;
controlling a plurality of markers to be indicated on the extracted edges of the designated soft button;
adjusting the makers based on the change information; and
adjusting the edges of the designated soft button to be fitted with the adjusted markers.

7. The imaging device of Claim 6, wherein the attributes include a size, a rotation angle, a width of an edge line width, a background color and a shape of an edge line of the designated soft button.
